# EUROPÄISCHE PATENTSCHRIFT

(11) **EP 1 972 815 B1**
(45) Veröffentlichungstag und Bekanntmachung des Hinweises auf die Patenterteilung: **27.06.2012**
(21) Anmeldenummer: 08003633.8
(22) Anmeldetag: 28.02.2008
(51) Int. Cl.: F16D 13/75

(54) **Antriebsfeder für eine Tellerfederhebelbaugruppe zum Betätigen einer Reibungskupplung mit integriertem Verschleißausgleich sowie Tellerfederhebelbaugruppe**
Driving spring for a disc spring lever assembly for actuating a friction clutch with integrated abrasion compensation and disc spring lever assembly
Ressort à disque d'entraînement pour un ensemble de levier de ressort à disque destiné à l'actionnement d'un embrayage à friction à compensation d'usure intégrée et ensemble de levier de ressort à disque

(30) Priorität: 22.03.2007 DE 102007013785
(43) Veröffentlichungstag der Anmeldung: 24.09.2008
(73) Patentinhaber: Schaeffler Technologies AG & Co. KG, 91074 Herzogenaurach (DE)
(72) Erfinder: Ortmann, Matthias, 77654 Offenburg (DE)

(56) Entgegenhaltungen:
- EP-A1- 1 568 905
- EP-A2- 1 657 461
- WO-A1-2006/105750

## Beschreibung

Die Erfindung betrifft eine Tellerfederhebelbaugruppe enthaltend einen Tellerfederhebel und eine mit dem Tellerfederhebel verbundene Antriebsfeder zum Betätigen einer Reibungskupplung mit integriertem Verschleißausgleich.

Insbesondere bei automatisierten Reibungskupplungen ist eine integrierte Verschleißnachstellung vorteilhaft, mittels der eine Kennlinie, die das übertragbare Kupplungsmoment in Abhängigkeit von der Stellung eines Aktors oder eines Betätigungsgliedes der Kupplung angibt, weitgehend unabhängig von einem Verschleiß der Reibbeläge der Kupplung konstant bleibt. Bekannt sind Nachstelleinrichtungen, bei denen ein Tellerfederhebel, mit dem die Kupplung betätigt wird, eine Antriebsfeder trägt, deren äußerer Umfang sich bei einer Verformung des Tellerfederhebels ändert. Über einem Schwellwert liegende Umfangsänderungen der Antriebsfeder, wie sie beispielsweise bei einem vorbestimmten Verschleiß der Reibbeläge auftreten, werden für eine Verschleißnachstellung genutzt.

Eine Tellerfederhebelbaugruppe gemäß dem Oberbegriff des Patentanspruchs 1 ist aus der EP 1 568 905 A1 oder WO 2006/105750 bekannt.

Ein Problem herkömmlicher, mit einer Tellerfederhebelbaugruppe ausgerüsteter, selbstnachstellender Reibungskupplungen liegt darin, dass Fliehkräfte, denen die Tellerfederhebelbaugruppe, die beispielsweise mit der Drehzahl einer ein Fahrzeug antreibenden Brennkraftmaschine dreht, ausgesetzt ist, eine Änderung des äußeren Umfangs der Antriebsfeder verursachen, woraus fehlerhafte Nachstellungen resultieren können.

Der Erfindung liegt die Aufgabe zugrunde, eine Tellerfederhebelbaugruppe anzugeben, bei der eine zumindest weitgehend von Fliehkrafteinflüssen freie Verschleißnachstellung erzielt wird.

Diese Aufgabe wird mit den Merkmalen des Patentanspruchs 1 gelöst.

Die Unteransprüche sind auf vorteilhafte Ausführungsformen und Weiterbildungen der erfindungsgemäßen Antriebsfeder gerichtet.

Bei einer vorteilhaften Ausführungsform ist an den beiden, dem Spalt benachbarten Endbereichen des Ringteils ein den Spalt überbrückender biegeweicher Bügel befestigt, dessen unter Fliehkrafteinwirkung vorhandene Belastung der unter Fliehkrafteinwirkung auftretenden Aufweitungstendenz des Spaltes entgegenwirkt.

Vorteilhafterweise ist der Bügel an den Endbereichen des Ringteils gelenkig befestigt.

Bei einer weiteren Ausführungsform ist der in Umfangsrichtung des Tellerfederhebels festlegbare Endbereich des Ringteils über eine Zwangsführung mit dem Ringteil verbunden, die zur radialen Richtung derart geneigt ist, dass der Ringteil bei einer radialen Auswärtsbewegung in Umfangsrichtung derart bewegt wird, dass sich die Weite des Spaltes vermindert.

Ein an dem Tellerfederhebel starr befestigbarer Endteil des Ringteils kann mit dem Ringteil über einen Arm verbunden sein, der am Ringteil starr befestigt ist und an dem Endbauteil mittels einer Kulissenführung befestigt ist, die zur radialen Richtung derart geneigt ist, dass eine radiale Auswärtsbewegung des Armes den Ringteil in Richtung einer Verkleinerung des Abstandes zwischen der Klinke und dem Endbauteil verdreht.

Bei einer vorteilhaften Ausführungsform ist an einem mit dem Tellerfederhebel starr verbindbaren Endbereich des Ringteils ein mit einer Umfangsverzahnung ausgebildetes Zahnrad angebracht ist, das mit der Klinke in einem in eine Drehrichtung des Zahnrades bewegungsübertragenden Eingriff ist und das bei seiner Verdrehung durch die Klinke eine Verschleißnachstellung der Kupplung bewirkt.

Die Erfindung wird im Folgenden anhand schematischer Zeichnungen beispielsweise und mit weiteren Einzelheiten erläutert, wobei zum besseren Verständnis der Erfindung zunächst an sich bekannte Anordnungen erläutert werden.

In den Figuren stellen dar:
- Fig. 1: einen Prinziphalbschnitt durch eine an sich bekannte Reibungskupplung,
- Fig. 2: ein Funktionsprinzip einer an sich bekannten Verschleißnachstellung,
- Fig. 3: eine Aufsicht auf die Anordnung gemäß Fig. 2 zur weiteren Erläuterung des Funktionsprinzips,
- Fig. 4: eine Aufsicht auf Teile eine Reibungskupplung mit einem Schneckenrad zur Verschleißnachstellung,
- Fig. 5: einen Schnitt durch die Anordnung gemäß Fig. 4 in der Ebene VN,
- Fig. 6: eine die Teilansicht der Anordnung gemäß Fig. 4, geschnitten längs der Linie VI/VI,
- Fig. 7: einen perspektivische Aufsicht auf eine Kupplung mit gegenüber der Fig. 4 abgeänderter Anbringung des Schneckenrades,
- Fig. 8: eine Aufsicht auf eine erfindungsgemäße Antriebsfeder, und
- Fig. 9: eine Aufsicht auf eine weitere Ausführungsform einer erfindungsgemäßen Antriebsfeder.

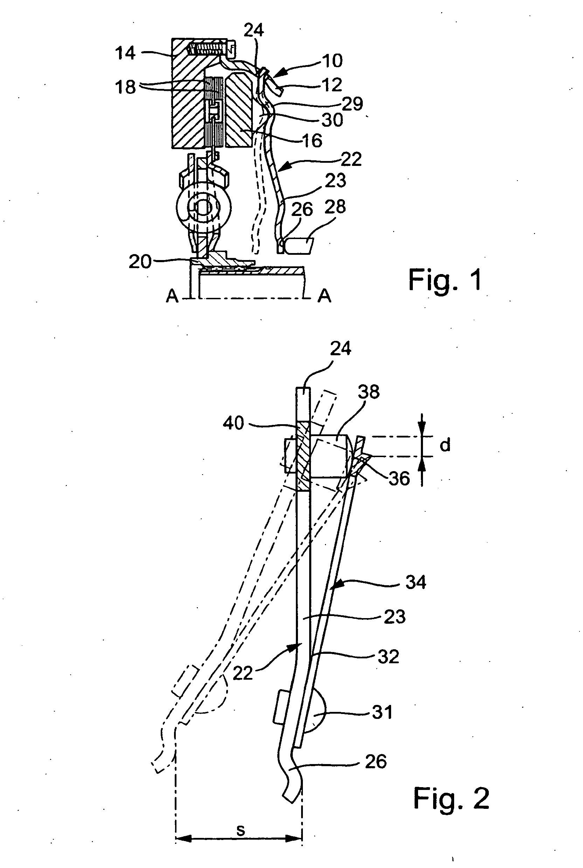

Fig. 1 zeigt einen Halbschnitt durch eine an sich bekannte Reibungskupplung 10 mit der Drehachse A-A.

Die Kupplung enthält einen Deckel bzw. ein Gehäuse 12, der bzw. das starr mit einer Gegendruckplatte 14 verbunden ist, die beispielsweise starr mit einer Schwungscheibe einer Brennkraftmaschine verbunden ist. Weiter ist eine mit dem Gehäuse 12 drehfest, jedoch axial verschiebbar verbundene Anpressplatte 16 vorgesehen, mittels der Reibbeläge 18 gegen die Gegendruckplatte 14 pressbar sind, welche Reibbeläge an einer Kupplungsscheibe 20 angebracht sind, die drehfest mit einer Welle 21, beispielsweise einer Getriebeeingangswelle, verbunden ist.

Zum axialen Bewegen der Anpressplatte 16 ist ein insgesamt ringscheibenförmiger Tellerfederhebel 22 vorgesehen, der aus einzelnen in Umfangsrichtung nebeneinander angeordneten, radial einwärts gerichteten und radial außen über einen in Umfangsrichtung geschlossenen ringscheibenförmigen Umfangsrand 24 miteinander verbundenen Federzungen 23 besteht. Im dargestellten Beispiel stützt sich der Tellerfederhebel an seinem Umfangsrand 24 an dem Gehäuse 12 ab und wird an seinem inneren Umfangsrand 26 mittels eines Betätigungsglieds 28 axial bewegt. Das Betätigungsglied 28 enthält beispielsweise ein mit der Achse A-A konzentrisches Ringlager, so dass eine lineare Bewegung eines ortsfesten Aktors in eine lineare Bewegung des inneren Umfangsrands 26 des sich drehenden Tellerfederhebels 22 umsetzbar ist.

Der Tellerfederhebel 22 wirkt über Rampenflächen 24 mit Rampenflächen 30 der Anpressplatte 16 zusammen, wobei die Rampenfläche in Umfangsrichtung mit unterschiedlicher Dicke ausgebildet sind, so dass eine Relativdrehung zwischen der Anpressplatte 16 und dem Tellerfederhebel 22 einen Ausgleich von Verschleiß der Reibbeläge 18 oder sonstigem Verschleiß in Elementen der Kupplung ermöglicht. Gepunktet ist die Stellung des Tellerfederhebels 22 eingezeichnet, in der die Anpressplatte 16 gegen die Reibbeläge 18 gedrückt ist, d.h. die Kupplung geschlossen oder zugedrückt ist. Die mit ausgezogenen Linien dargestellte Stellung des Tellerfederhebels 22 entspricht dem offenen bzw. nicht eingerückten Zustand der Kupplung.

In an sich bekannter Weise kann die Kupplung durch einfache Umkonstruktion als zugedrückte, zugezogene oder aufgedrückte bzw. aufgezogene Kupplung konstruiert sein.

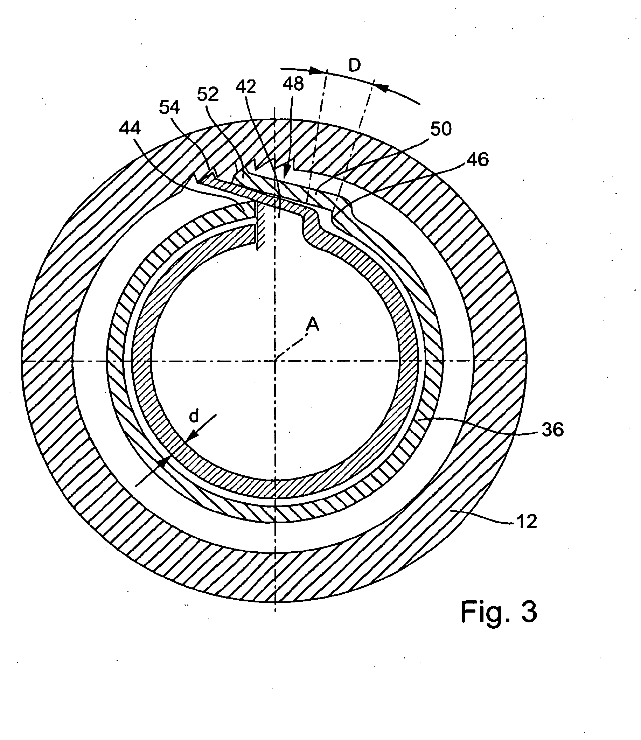

Fig. 2 zeigt in Verbindung mit Fig. 3 das Grundprinzip einer an sich bekannten Verschleißnachstellvorrichtung. Dabei zeigt Fig. 2 einen Halbschnitt durch den Tellerfederhebel 22 mit zugehörigen Bauteilen und Fig. 3 eine Aufsicht auf Elemente der Fig. 2 zur Erläuterung der Verschleißnachstellung.

Gemäß Fig. 2 sind die Federzungen 23 des Tellerfederhebels 22 beispielsweise durch Nieten 31 mit Speichen 32 einer insgesamt mit 34 bezeichneten Antriebsfeder verbunden, die einen äußeren Ringteil 36 aufweist, der die Speichen 32 verbindet. Die Antriebsfeder 34 stützt sich an der Tellerfederhebel 22 über Distanzstücke 38 ab, die beispielsweise mit dem Tellerfederhebel 22 vernietet sind und zu dem Ringteil 36 hin eine ballige Oberfläche aufweisen.

Wenn die Kupplung eingerückt wird, wird der Tellerfederhebel 22 an seinem inneren Umfangsrand 26 gemäß Fig. 2 um die Strecke s nach links bewegt und schwenkt dabei um eine am Gehäuse 12 (Fig. 1) ausgebildete Gegenlagerung, an der sich ein mit 40 bezeichneter Kraftrand des äußeren Umfangsrandes 24 abstützt. Die Ringachse dieser Schwenklagerung liegt vorteilhafter Weise in radialer Nähe des Bereiches, in dem die Distanzstücke 38 mit dem Tellerfederhebel 22 verbunden sind.

Wie aus der Fig. 2 unmittelbar ersichtlich, bleibt beim Verschwenken des Tellerfederhebels 22 der Abstand zwischen den Nieten 30 und dem Kraftrand 40 im Wesentlichen konstant, so dass sich das durch den Tellerfederhebel 22, die Antriebsfeder 34 und das Distanzstück 38 gebildete Dreieck derart verformt, dass sich die Antriebsfeder 34 unter Abgleiten auf dem Distanzstück 38 mit ihrem Ringteil 36 um die Strecke d radial einwärts bewegt. Die Verschwenkung ist jeweils mit einer konischen Verformung der verformten Bauteile verbunden.

Fig. 3 verdeutlicht die Verhältnisse in Aufsicht und zeigt zusätzlich weitere funktionswesentliche Details der Anordnung. Der Ringteil 36 ist mit einem radialen Spalt bzw. Spalt 42 versehen. Ein dem Spalt 42 benachbarter Endbereich 44 des Ringteils 36 ist in Umfangsrichtung relativ zu dem Gehäuse 12 (Fig. 1) der Kupplung fixiert. Der andere, an den Spalt 42 grenzende Endbereich 46 des Ringteils 36 ist mit einer Klinke 48 versehen, die aus einem den Spalt 42 radial außen überlagernden Federarm 50 besteht, der an seinem freien Ende wenigstens einen Zahn 52 aufweist, der von dem Federarm 50 radial auswärts in Eingriff in eine Verzahnung 54 gedrängt ist. Die Verzahnung 54 ist am Gehäuse 12 oder an einem eigenen Bauteil, beispielsweise einem Verstellring, ausgebildet. Wie ersichtlich, ist der Zahneingriff derart, dass bei einer Bewegung der Klinke 48 relativ zu der Verzahnung 54 in Gegenuhrzeigerrichtung die Klinke die Verzahnung unter elastischer Verformung des Federarms 50 im Sinne eines Freilaufes überläuft, wohingegen in Gegenrichtung ein Drehmoment übertragender Eingriff zwischen dem Zahn 52 und der Verzahnung 54 besteht.

Wenn der mit einem Schlitz bzw. Spalt versehene Ringteil 36 aus der ausgezogenen Stellung, die der nicht betätigten Stellung der Kupplung bzw. der in Fig. 2 ausgezogenen Stellung entspricht, durch Betätigen der Kupplung um den Radialweg d nach innen gezogen wird (gestrichelt dargestellte Stellung), deckt er aufgrund seiner konstanten Umfangslänge einen größeren Winkelbereich ab, d.h. die Breite des Spaltes 42 nimmt um das Maß Δ ab. Da der Endbereich 44 des Ringteils 36 in tangentialer Richtung festgelegt ist, führt dies zu einer Tangentialbewegung bzw. Bewegung in Umfangsrichtung um die Strecke Δ des mit der Klinke 48 versehenen Endbereichs 46 des Ringteils 36. Dies wird dadurch ermöglicht, dass der Ringteil 36 über biegeweiche Speichen 32 (in Fig. 3 nicht dargestellt) mit dem Tellerfederhebel 22 verbunden ist und die Berührstellen zwischen dem Ringteil 36 und den Distanzstücken 38 eine tangentiale Gleitbewegung zulassen. Durch diesen Mechanismus entsteht ein nahezu lineares Verhältnis zwischen Einrückweg bzw. Schwenkwinkel des Tellerfederhebels 22 und dem Tangentialweg Δ der Antriebsfeder 34 bzw. von deren Ringteil 36. Im Normalfall reicht der Tangentialweg an der Klinke 48 gerade nicht aus, um in den nächsten Zahn der Verzahnung 54 zu springen. Mit zunehmendem Kupplungsverschleiß erhöht sich jedoch die Tangentialbewegung und die Klinke erreicht die nächste Zahnlücke. Beim nachfolgenden Öffnen der Kupplung schiebt die Antriebsfeder bzw. der Ringteil 36 die Klinke fest in die Verzahnung zurück, wobei die Klinke an einem Zurückgleiten gehindert ist und die Antriebsfeder somit über die Klinke eine Tangentialkraft auf den Rampenmechanismus 29, 30 (Fig. 1) ausübt, so dass durch eine Relativverdrehung zwischen dem Tellerfederhebel und dem Gehäuse eine Nachstellung erzielt wird. Das Verhältnis von d zu Δ lässt sich durch die Konstruktion des Verbandes Tellerfederhebel-Antriebsfeder beeinflussen.

Das geschilderte Grundprinzip lässt sich in unterschiedlicher Weise zur Verschleißnachstellung nutzen:

Die Antriebsfeder 34 bewirkt bei Belagverschleiß eine Verschiebung der Klinke 48 relativ zu der Verzahnung 54, die als Umfangsverzahnungssegment ausgebildet ist und über einen Umfangswinkelbereich reicht, der zum Ausgleich des gesamten Verschleißes ausreicht. Welches Bauteil dabei feststeht und welches sich dreht, hängt von der Konstruktion ab. Wenn die Verzahnung feststeht, wird der Tellerfederhebel mit Rampen versehen und ist relativ zum Kupplungsgehäuse verdrehbar. Die Antriebsfeder kann sich dann zusammen mit dem Tellerfederhebel verdrehen. Die Rampen des Tellerfederhebels verändern die Axialposition der Anpressplatte und gleichen den Verschleiß aus.

Wenn die Antriebsfeder dazu genutzt wird, um einen Verstellring (nicht dargestellt) anzutreiben, wird der Tellerfederhebel-Antriebsfeder-Verbund im Kupplungsgehäuse gegen Verdrehen gesichert. Die Verzahnung ist dann Teil des mit Rampen versehenen Verstellrings, wobei die Rampen sowohl zwischen dem Tellerfederhebel und dem Verstellring als auch zwischen dem Verstellring und einem mit Anpressplatte drehfest verbundenem Bauteil angeordnet sein können.

Bei einer abgeänderten Ausführungsform, bei der die Klinke 48 den Spalt 42 beispielsweise nicht vollständig überbrückt, ist auch der Endbereich 44 mit einer Verzahnung ausgebildet, die in eine Richtung bewegungsübertragend in eine Gegenverzahnung eingreift, die in dem Bauteil ausgebildet ist, in dem auch die Verzahnung 54 ausgebildet ist. Dadurch kann die Antriebsfeder bzw. der Tellerfederhebel verdrehsicher gehalten werden, während die Klinke 48 die Verzahnung 54 überläuft.

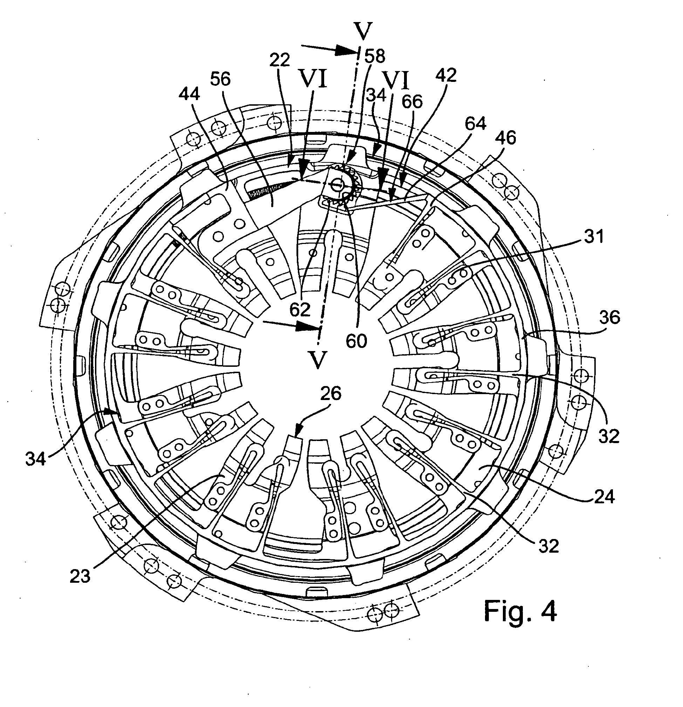

Im Folgenden wird eine abgeänderte Ausführungsform einer Verschleißnachstelleinrichtung, anhand der Fig. 4 bis 6 erläutert:

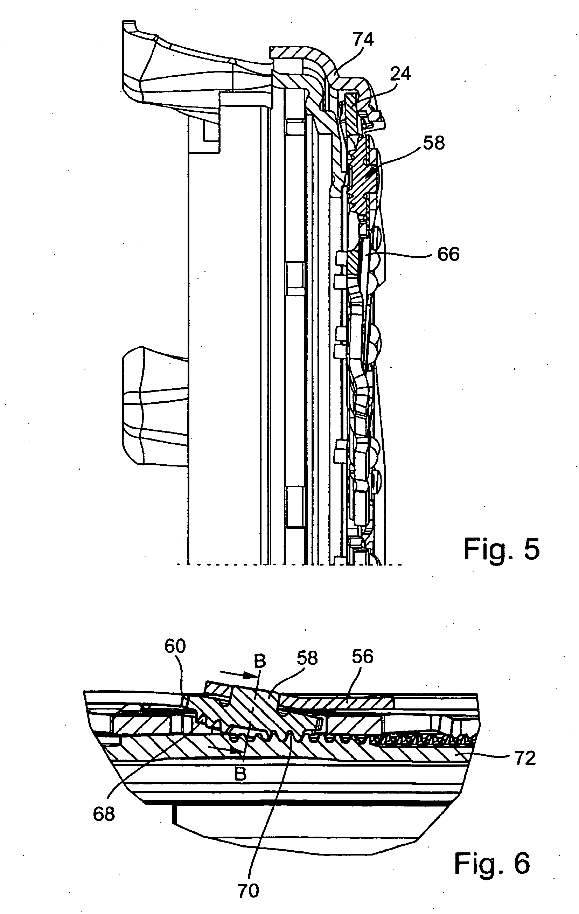

Fig. 4 zeigt eine Aufsicht auf den in Fig. 1 nicht mit den Details der Fig. 4 bis 6 dargestellten Tellerfederhebel 22. Fig. 5 zeigt einen Schnitt längs V-V der Fig. 4 und Fig. 6 zeigt einen Schnitt längs der Linie VI-VI der Fig. 4, wobei sich funktional entsprechende Bauteile mit denselben Bezugszeichen belegt sind, wie in Fig. 1 bis 3.

Die Weite des Spaltes 42 des Ringteils 36 der Antriebsfeder 34 ist größer als bei der Ausführungsform gemäß Fig. 3.

Im dargestellten Beispiel sei angenommen, dass sich die Weite des Spaltes 42 verkleinert, wenn der innere Umfang des Tellerfederhebels 22 gemäß Fig. 1 nach rechts bewegt wird. Die Weite ist minimal, wenn das Betätigungsbauteil 28 aus der Stellung gemäß Fig. 1 nach rechts über die der offenen Stellung der Kupplung hinaus gehende Ruhelage verschoben wird bzw. der Tellerfederhebel 22 infolge von zuviel Verschleiß der Reibbeläge 18 völlig kraftlos wird.

Mit dem gemäß Fig. 4 links des Spaltes 42 angeordneten Endbereich 44 der Antriebsfeder 34 ist ein Blattfederarm 56 beispielsweise durch Nieten starr verbunden, an dessen freiem Ende ein Schneckenrad 58 drehbar gelagert ist. Das Schneckenrad 58 ist an seinem Umfang mit einer Verzahnung 60 ausgebildet, in die eine Mitnehmerverzahnung 62 eingreift, die am Ende eines Federarms 64 ausgebildet ist, der von dem rechts des Spaltes befindlichen Endbereich 46 des Ringteils 36 der Antriebsfeder 34 vorsteht. Die Mitnehmerverzahnung 62 enthält mindestens einen Zahn und bildet zusammen mit dem Federarm 64 eine Klinke 66, die in einer Richtung sperrt und in die andere Richtung "frei läuft". Die Klinke 66 entspricht somit der Klinke 48 der Fig. 3.

Der Federarm 64 ist derart ausgebildet, dass er die Mitnehmerverzahnung 62 in Eingriff in die Umfangsverzahnung 60 drängt. Die Verzahnungen 62 und 60 sind derart geformt, dass im dargestellten Beispiel gemäß Fig. 4 die Mitnehmerverzahnung 62 das Schneckenrad 58 in Gegenuhrzeigerrichtung dreht, jedoch eine Drehung des Schneckenrades 58 in Uhrzeigerrichtung nicht zwangsläufig erfolgt, sondern sich die Verzahnungen dabei überlaufen können.

Wie aus den Fig. 4 und 5 ersichtlich, ist das Schneckenrad 58 an seiner Unterseite mit einer spiralförmig verlaufenden Schneckenrille 68 versehen. Die Achse B-B, um die das Schneckenrad 58 drehbar im Blattfederarm 56 gelagert ist, ist zur Umfangsrichtung derart geneigt, dass nur einer der beiden bezogen auf die Drehachse B-B in Umfangsrichtung liegenden Bereiche der Schneckenrille 68 in eine Gegenverzahnung 70 eingreift, deren Zähne radial gerichtet sind und die in einem mit dem Gehäuse 12 starr verbundenen Bauteil oder am Gehäuse selbst ausgebildet ist. Im Unterschied zur Ausführungsform gemäß Fig. 1 untergreift der Umfangsrand 24 des Tellerfederhebels 22 einen Zuganker 74, der in an sich bekannter Weise eine Grundplatte der Kupplung übergreift und eine gemäß Fig. 5 linksseitig angeordnete Anpressplatte (nicht dargestellt) betätigt.

Die Funktion der Verschleißnachstelleinrichtung ist folgende:
Es sei angenommen, die Weite des Spaltes 42 bzw. die Länge des äußeren Umfangs der Antriebsfeder 34 nehme bei Bewegung des Tellerfederhebels 22 aus der gepunkteten Stellung der Fig. 1 in die durchgezogene Stellung bzw. zur gezielten Nachstellung der Kupplung über die durchgezogen dargestellte Stellung hinaus nach rechts über ein vorbestimmtes Maß hinaus ab. Wenn dieses Maß bzw. dieser Schwellwert das Modul der Verzahnungen 60, 62 übersteigt, überfährt die Mitnehmerverzahnung 62 die Umfangsverzahnung 60 gemäß Fig. 4 nach links, so dass bei einer anschließenden Rückkehr des Tellerfederhebels in die Stellung gemäß Fig. 1 das Schneckenrad 58 in Gegenuhrzeigerrichtung verdreht wird. Infolge des Eingriffs der Schneckenrille 68 in die Gegenverzahnung 70, wobei dieser Eingriff durch eine entsprechende Vorspannung des Blattfederarms 56 gewährleistet ist, führt dies zu einer Relativverdrehung zwischen dem Tellerfederhebel 22 und dem gehäusefesten Bauteil 72 bzw. dem Gehäuse 12, wodurch sich ein axialer Abstand zwischen dem Umfangsrand 24 und dem Zuganker 74, die sich über nicht dargestellte Rampenflächen aneinander abstützen, im Sinne einer Verschleißnachstellung verändert.

Der Blattfederarm 56, der das Schneckenrad 58 axial in die Gegenverzahnung 54 drängt, überträgt auch das zum Verdrehen notwendige Drehmoment zwischen dem Gehäuse und der Ringscheibenfeder.

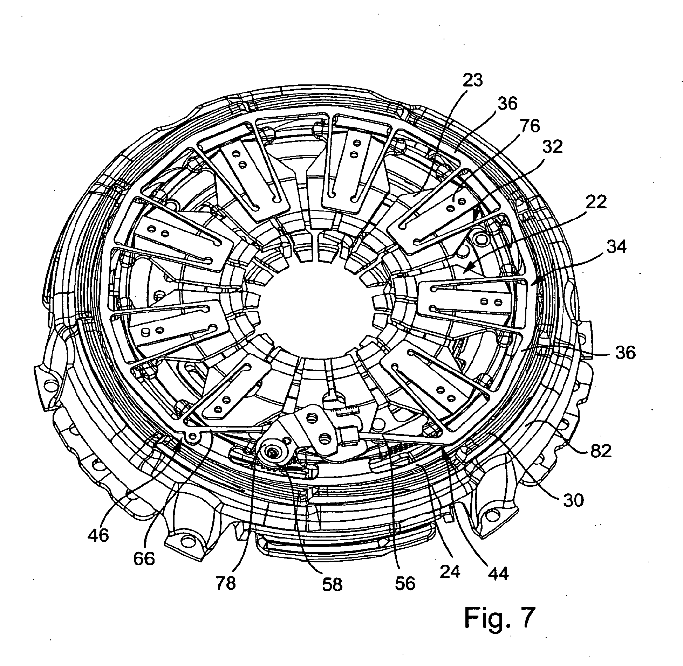

Fig. 7 zeigt eine perspektivische Aufsicht auf eine selbstnachstellende Kupplung mit einer gegenüber der Ausführungsform gemäß Fig. 4 geringfügig abgeänderten Baugruppe aus Tellerfederhebel 22 und Antriebsfeder 34.

Die Speichen 32, die vom Ringteil 36 der Antriebsfeder 34 radial einwärts vorstehen, sind als Stege von Stanzblechteilen ausgebildet, die an ihrem inneren Ende miteinander verbunden sind, wobei von der radial inneren Verbindung eine Lasche 76 radial auswärts vorsteht, die mit jeweils einer Federzunge 23 des Tellerfederhebels 22 oder mit dessen in Umfangsrichtung durchlaufendem Umfangsrand vernietet ist.

Das Schneckenrad 58 ist an einem Endbauteil 78 angebracht, das beispielsweise mittels Nieten mit dem Tellerfederhebel 22 in dessen äußerem Umfangsbereich starr verbunden ist und mittels des Blattfederarms 56 mit dem Ringteil 36 der Antriebsfeder 34 verbunden ist.

Ein Problem, das sich bei den bisher geschilderten Ausführungsformen der Baugruppe aus Tellerfederhebel und Antriebsfeder stellt, besteht darin, dass sich die Bauteile, insbesondere der Tellerfederhebel, durch Fliehkraft aufweiten, wodurch sich auch die Antriebsfeder 34 bzw. deren Ringteil 36 aufweitet, der, wie vorstehend erläutert, maßgeblich für die Verschleißnachstellung der Kupplung ist. Die Funktionalität dieser Verschleißnachstellung wird daher durch Fliehkräfte beeinflusst und ist von der Drehzahl abhängig, mit der die Kupplung dreht. Durch Fliehkrafteinfluss verändert sich die Position der Klinke bzw. von deren Verzahnung beispielsweise um etwa 0,2 mm.

Um die Abhängigkeit der Verschleißnachstellung von der Drehzahl zumindest weitgehend zu beseitigen, wird erfindungsgemäß vorgeschlagen, die Baugruppe aus Tellerfederhebel und Antriebsfeder, insbesondere die Antriebsfeder, mit einer Fliehkraftkompensationseinrichtung zu versehen, die den Einfluss von Fliehkräften kompensiert.

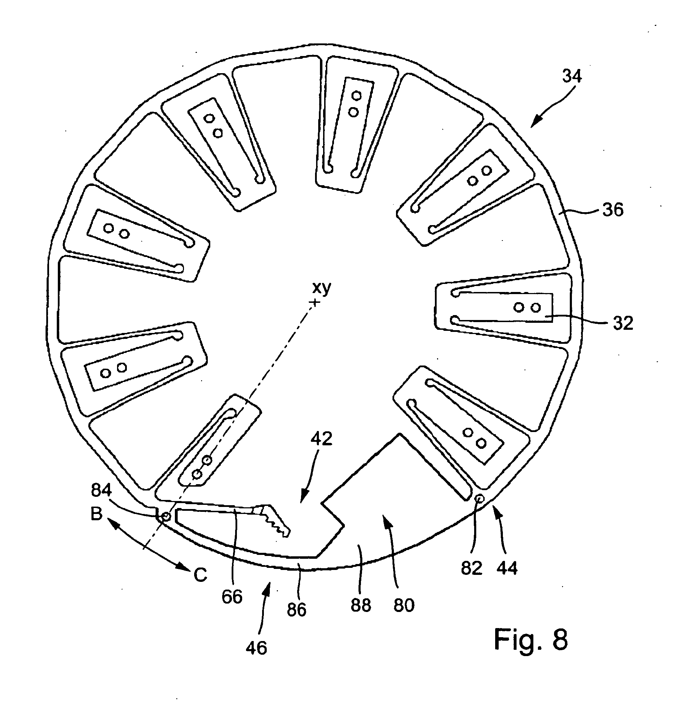

Fig. 8 zeigt eine erste Ausführungsform einer solchen Fliehkraftkompensationseinrichtung. Dazu sind der mit der Klinke 66 versehene Endbereich 46 des Ringteils 36 der Antriebsfeder 34 und der an dem Tellerfederhebel 22 starr befestigte Endbereich 44 des Ringteils 36 mittels eines Bügels 80 miteinander verbunden, der bevorzugt an den Endbereichen 44 und 46 über Gelenke 82, 84 befestigt ist. Die Gelenke können gesondert mit Drehachsen ausgebildet sein oder durch gezielte Materialschwächungen ausgebildet sein, die eine Verdrehung des Bügels um auf der Zeichnungsebene senkrecht stehenden Achsen der Gelenke 82 und 84 erlauben. Der Bügel 80 ist insgesamt biegeweich, indem er beispielsweise aus einem biegeweichen Arm 86 und einem massebehafteten Teil 88 zusammengesetzt ist.

Die Funktion der Ausführungsform der Antriebsfeder gemäß Fig. 8, deren Speichen, wie anhand der Fig. 4 und 7 beschrieben, an dem Tellerfederhebel 22 befestigt sind, ist folgende:

Unter dem Einfluss von Fliehkräften, die auftreten, wenn sich die Antriebsfeder zusammen mit dem in Fig. 8 nicht dargestellten Tellerfederhebel um die Achse A-A (Fig. 1) dreht, ist der nicht an dem Tellerfederhebel befestigte Endbereich 46 des Ringteils 36 der Antriebsfeder 34 bestrebt, sich aufzuweiten, d.h. in Richtung des Pfeils B zu bewegen. Der Bügel 80 wird durch die Fliehkraft radial nach außen gedrängt und ist infolge dessen bestrebt, den Endbereich 46 in Richtung des Pfeils C zu ziehen, wobei dieses Bestreben durch die Biegbarkeit des Arms 46 und die Masse des Teils 88 unterstützt wird. Insgesamt wird auf diese Weise der Einfluss der Fliehkraft auf die Lage des Endbereichs 46 bzw. der Klinke 66 kompensiert, so dass die Stellung der Klinke 66 letztlich im Wesentlichen nur durch die konische Verformung des Tellerfederhebels 22 infolge der Betätigung der Kupplung bestimmt ist.

Der Bügel 80 wird durch seine Anbindung an die Endbereiche 44 und 46, seine Biegeweichheit und seine Masseverteilung derart optimiert, dass der Fliehkrafteinfluss minimiert ist.

Die fliehkraftkompensierende Ausbildung der Antriebsfeder 34 ist sowohl bei einer Verschleißnachstellung ohne Schneckenrad (Fig. 3) als auch mit Schneckenrad (Fig. 4 und 5) einsetzbar.

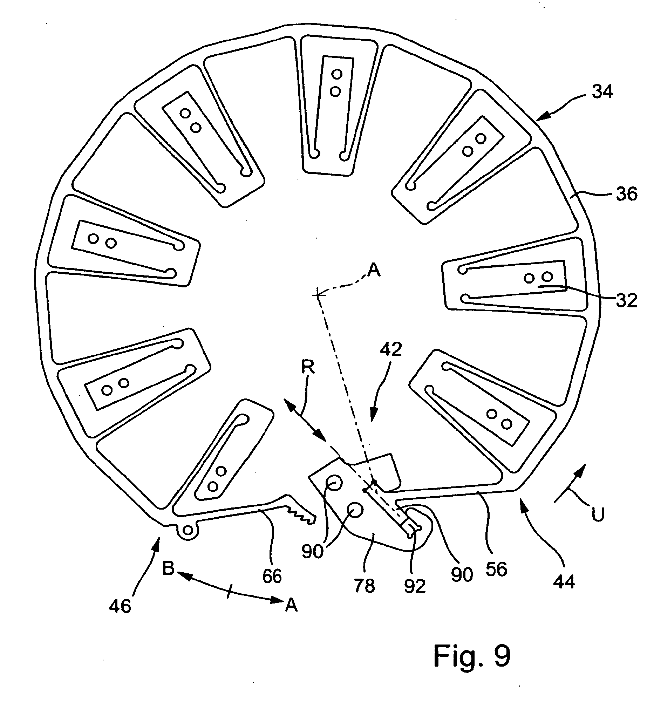

Eine zweite Möglichkeit der Fliehkraftkompensation ist anhand der Fig. 9 beispielhaft dargestellt. Die Antriebsfeder 34 gemäß Fig. 9 unterscheidet sich von der Antriebsfeder gemäß Fig. 7 dadurch, dass das beispielsweise über Nieten 90 starr mit dem Tellerfederhebel verbundene Endbauteil 78 mit dem Blattfederarm 56 nicht starr verbunden ist, sondern der Blattfederhebel 56 in einem Führungsteil 90 endet, der in einer Kulisse 92 geführt ist, die in dem Endbauteil 78 ausgebildet ist. Die durch die Kulisse 92 gegebene Bewegbarkeitsrichtung R des Führungsteils 90 relativ zu dem Endbauteil 78 ist zur radialen Richtung derart geneigt, dass sich bei einer radialen Auswärtsbewegung des Führungsteils 90 relativ zum Endbauteil 78 der Endbereich 44 des Ringteils 36 in Richtung des Pfeils U bewegt, wobei der Ringteil 36 insgesamt derart verdreht wird, dass sich die Klinke 66 an das Endbauteil 78 annähert. Ähnlich wie bei der Ausführungsform gemäß Fig. 8 wird mit dieser Konstruktion das Bestreben der Klinke 66, sich unter Fliehkrafteinfluss in Richtung des Pfeils B zu bewegen, dadurch kompensiert, dass sich das Führungsteil 90 unter Fliehkrafteinfluss radial auswärts zu bewegt, wobei diese Bewegung in Folge der Führung des Führungsteils 90 in der Kulisse 92 in eine Bewegung in Umfangsrichtung des Ringteils 36 umgewandelt wird, die zu einer Bewegung des Endbereichs 46 in Richtung des Pfeils A führt. Die Weite des Spaltes bzw. die Lage der Klinke relativ zum Schneckenrad wird auf diese Weise durch Fliehkraft nicht beeinflusst.

Der Blattfederarm 56 hat eine für die Bewegungsübertragung in Umfangsrichtung ausreichende Steifigkeit. Weiter kann das Führungsteil 90 erforderlichenfalls massebehaftet werden, so dass der Fliehkrafteinfluss in Richtung der Bewegung des Endbereiches 54 in Umfangsrichtung unterstützt wird. Bei der Ausführungsform gemäß Fig. 9 ist der Endbereich 44 des Ringteils 36 nicht unmittelbar starr an dem Tellerfederhebel 22 befestigt sondern unter Zwischenanordnung der Kulissenführung über das Endbauteil 78.

Die beiden beispielhaft geschilderten Ausführungsformen eines integrierten Fliehkraftausgleiches können in vielfältiger Weise abgeändert werden.

### Bezugszeichenliste

| | | | |
|---|---|---|---|
| 10 | Reibungskupplung | 66 | Klinke |
| 12 | Gehäuse | 68 | Schneckenrille |
| 14 | Gegendruckplatte | 70 | Gegenverzahnung |
| 16 | Anpressplatte | 72 | Bauteil |
| 18 | Reibbelag | 74 | Zuganker |
| 20 | Kupplungsscheibe | 76 | Lasche |
| 22 | Tellerfederhebel | 78 | Endbauteil |
| 23 | Federzunge | 80 | Bügel |
| 24 | Umfangrand | 82 | Gelenk |
| 26 | innerer Umfangsrand | 84 | Gelenk |
| 28 | Betätigungsglied | 86 | Arm |
| 29 | Rampenfläche | 88 | Teil |
| 30 | Rampenfläche | 90 | Führungsteil |
| 31 | Nieten | 92 | Kulisse |
| 32 | Speichen | | |
| 34 | Antriebsfeder | | |
| 36 | Ringteil | | |
| 38 | Distanzstück | | |
| 40 | Kraftrand | | |
| 42 | Spalt | | |
| 44 | Endbereich | | |
| 46 | Endbereich | | |
| 48 | Klinke | | |
| 50 | Federarm | | |
| 52 | Zahn | | |
| 54 | Verzahnung | | |
| 56 | Blattfederarm | | |
| 58 | Schneckenrad | | |
| 60 | Umfangsverzahnung | | |
| 62 | Mitnehmerverzahnung | | |
| 64 | Federarm | | |

## Patentansprüche

1. Tellerfederhebelbaugruppe, enthaltend einen Tellerfederhebel (22) und eine mit dem Tellerfederhebel (22) verbundene Antriebsfeder (34) zum Betätigen einer Reibungskupplung mit integriertem Verschleißausgleich, wobei der Tellerfederhebel (22) einen in Umfangsrichtung durchgehenden, radial äußeren ringscheibenförmigen Umfangsrand (24) aufweist, von dem axial einwärts gerichtete Federzungen (23) ausgehen, und die Antriebsfeder (34) einen mit einem radialen Spalt (42) versehenen Ringteil (36) aufweist, von dem insgesamt radial einwärts gerichtete Speichen (32) ausgehen, wobei ein an einer Seite des Spaltes (42) befindlicher Endbereich (44) des Ringteils (36) zumindest in Umfangsrichtung relativ zur Antriebsfeder (34) festlegbar ist, und ein auf der anderen Seite des Spaltes (42) befindliche Endbereich (46) des Umfangsrings mit einer Klinke (48; 66) versehen ist, so dass sich die Klinke (48, 66) bei einer konischen Verformung des Tellerfederhebels (22) und **dadurch** verursachten Änderung der Weite des Spaltes (42) in Umfangsrichtung relativ zu dem in Umfangsrichtung festlegbaren Endbereich (44) bewegt, und diese Bewegung für eine Verschleißnachstellung nutzbar ist, **gekennzeichnet durch** eine Fliehkraftkompensationseinrichtung (80; 92, 90), welche einer Aufweitung des Spaltes (42) infolge von bei einer Drehung der Antriebsfeder (34) um eine Achse ihres Ringteils (36) auftretenden Fliehkräfte entgegenwirkt.

2. Tellerfederbaugruppe nach Anspruch 1, **dadurch gekennzeichnet, dass** an den beiden, dem Spalt (42) benachbarten Endbereichen (44, 46) des Ringteils (36) ein den Spalt (42) überbrückender biegeweicher Bügel (80) befestigt ist, dessen unter Fliehkrafteinwirkung vorhandene Belastung der unter Fliehkrafteinwirkung auftretenden Aufweitungstendenz des Spaltes (42) entgegenwirkt.

3. Tellerfederbaugruppe nach Anspruch 2, **dadurch gekennzeichnet, dass** der Bügel (80) an den Endbereichen (44, 46) des Ringteils (36) gelenkig befestigt ist.

4. Tellerfederbaugruppe nach Anspruch 1, **dadurch gekennzeichnet, dass** der zumindest in Umfangsrichtung des Tellerfederhebels (22) festlegbare Endbereich (44) des Ringteils (36) über eine Zwangsführung (90, 92) mit dem Ringteil (36) verbunden ist, die zur radialen Richtung derart geneigt ist, dass der Ringteil (36) bei einer radialen Auswärtsbewegung in Umfangsrichtung derart bewegt wird, dass sich die Weite des Spaltes (42) vermindert.

5. Tellerfederbaugruppe nach Anspruch 4, **dadurch gekennzeichnet, dass** ein am Tellerfederhebel (22) starr befestigbares Endbauteil (78) des Ringteils (36) mit dem Ringteil (36) über einen Arm (56) verbunden ist, der am Ringteil (36) starr befestigt ist und an dem Endbauteil (78) mittels einer Kulissenführung (90, 92) befestigt ist, die zur radialen Richtung derart geneigt ist, dass eine radiale Auswärtsbewegung des Armes (56) den Ringteil (36) in Richtung einer Verkleinerung des Abstandes zwischen der Klinke (66) und dem Endbauteil (78) verdreht.

6. Tellerfederbaugruppe nach einem der Ansprüche 1 bis 5, **dadurch gekennzeichnet, dass** an dem mit einem Tellerfederhebel (22) starr verbindbaren Endbereich (44) des Ringteils (36) ein mit einer Umfangsverzahnung ausgebildetes Zahnrad (58) angebracht ist, das mit der Klinke (66) in einem in eine Drehrichtung des Zahnrades (58) bewegungsübertragenden Eingriff ist und das bei seiner Verdrehung durch die Klinke (66) eine Verschleißnachstellung der Kupplung bewirkt.

## Claims

1. Disc spring lever assembly, containing a disc spring lever (22) and a driving spring (34), connected to the disc spring lever (22), for actuating a friction clutch with integrated abrasion compensation, the disc spring lever (22) having a circumferentially continuous radially outer circumferential margin (24) which is in the form of an annular disc and from which spring tongues (23) directed axially inwards emanate, and the driving spring (34) having a ring part (36) which is provided with a radial gap (42) and from which, overall, spokes (32) directed radially inwards emanate, an end region (44), located on one side of the gap (42), of the ring part (36) being fixable in relation to the driving spring (34), at least in the circumferential direction, and an end region (46), located on the other side of the gap (42), of the circumferential ring being provided with a pawl (48; 66), so that, in the event of conical deformation of the disc spring lever (22) and a thereby induced change in the width of the gap (42), the pawl (48, 66) is moved in the circumferential direction in relation to the end region (44) fixable in the circumferential direction, and this movement can be utilized for abrasion adjustment, **characterized by** a centrifugal force compensation device (80; 92, 90) which counteracts a widening of the gap (42) as a result of centrifugal forces occurring during rotation of the driving spring (34) about an axis of its ring part (36).

2. Disc spring assembly according to Claim 1, **characterized in that** there is fastened to the two end regions (44, 46) of the ring part (36) which are adjacent to the gap (42) a flexible stirrup (80) which bridges the gap (42) and of which the load present under the action of centrifugal force counteracts the tendency of the gap (42) to widen which occurs under the action of centrifugal force.

3. Disc spring assembly according to Claim 2, **characterized in that** the stirrup (80) is fastened to the end regions (44, 46) of the ring part (36) in an articulated manner.

4. Disc spring assembly according to Claim 1, **characterized in that** the end region (44), fixable at least in the circumferential direction of the disc spring lever (22), of the ring part (36) is connected to the ring part (36) via a positive guide (90, 92) which is inclined to the radial direction in such a way that, in the event of a radial outward movement, the ring part (36) is moved in the circumferential direction in such a way that the width of the gap (42) is reduced.

5. Disc spring assembly according to Claim 4, **characterized in that** an end component (78), fastenable rigidly to the disc spring lever (22), of the ring part (36) is connected to the ring part (36) via an arm (56) which is fastened rigidly to the ring part (36) and is fastened to the end component (78) by means of a slotted guide (90, 92) which is inclined to the radial direction in such a way that a radial outward movement of the arm (56) rotates the ring part (36) in the direction of a reduction in the distance between the pawl (66) and the end component (78).

6. Disc spring assembly according to one of Claims 1 to 5, **characterized in that** there is attached to the end region (44), connectable rigidly to a disc spring lever (22), of the ring part (36) a gearwheel (58) which is designed with circumferential toothing and which is in engagement with the pawl (66) so as to transmit movement in one direction of rotation of the gearwheel (58), and which, when rotated by the pawl (66), causes abrasion adjustment of the clutch.

## Revendications

1. Module de levier de ressort à disque, contenant un levier de ressort à disque (22) et un ressort d'entraînement (34) connecté au levier de ressort à disque (22), pour actionner un embrayage à friction à compensation de l'usure intégrée, le levier de ressort à disque (22) présentant un bord périphérique (24) continu dans la direction périphérique, en forme de disque annulaire radialement à l'extérieur, depuis lequel partent des langues de ressort (23) orientées radialement vers l'intérieur, et le ressort d'entraînement (34) présentant une partie annulaire (36) pourvue d'une fente radiale (42), de laquelle partent des rayons (32) orientés généralement radialement vers l'intérieur, une région d'extrémité (44) de la partie annulaire (36) se trouvant d'un côté de la fente (42) pouvant être fixée au moins dans la direction périphérique par rapport au ressort d'entraînement (34) et une région d'extrémité (46) de la bague périphérique se trouvant de l'autre côté de la fente (42) étant pourvue d'un cliquet (48 ; 66), de sorte que le cliquet (48, 66), dans le cas d'une déformation conique du levier de ressort à disque (22) et d'une modification en résultant de la largeur de la fente (42), se déplace dans la direction périphérique par rapport à la région d'extrémité (44) pouvant être fixée dans la direction périphérique, et ce déplacement pouvant être utilisé pour un rattrapage de l'usure, **caractérisé par** un dispositif de compensation de la force centrifuge (80 ; 92, 90) qui agit à l'encontre d'un écartement de la fente (42) dû aux forces centrifuges se produisant dans le cas d'une rotation du ressort d'entraînement (34) autour d'un axe de sa partie annulaire (36).

2. Module de levier de ressort à disque selon la revendication 1, **caractérisé en ce qu'**au niveau des deux régions d'extrémité (44, 46) de la partie annulaire (36) adjacentes à la fente (42) est fixé un étrier (80) élastique souple surmontant la fente (42), dont la sollicitation existant sous l'effet de la force centrifuge agit à l'encontre de la tendance à l'élargissement de la fente (42) se produisant sous l'effet de la force centrifuge.

3. Module de levier de ressort à disque selon la revendication 2, **caractérisé en ce que** l'étrier (80) est fixé de manière articulée au niveau des régions d'extrémité (44, 46) de la partie annulaire (36).

4. Module de levier de ressort à disque selon la revendication 1, **caractérisé en ce que** la région d'extrémité (44) de la partie annulaire (36) pouvant être fixée au moins dans la direction périphérique du levier de ressort à disque (22) est connectée à la partie annulaire (36) par un guidage forcé (90, 92), la partie annulaire étant inclinée dans la direction radiale de telle sorte que la partie annulaire (36), dans le cas d'un déplacement radial vers l'extérieur, soit déplacée dans la direction périphérique de telle sorte que la largeur de la fente (42) diminue.

5. Module de levier de ressort à disque selon la revendication 4, **caractérisé en ce qu'**un composant d'extrémité (78) de la partie annulaire (36) pouvant être fixé rigidement sur le levier de ressort à disque (22) est connecté à la partie annulaire (36) par le biais d'un bras (56), qui est fixé rigidement sur la partie annulaire (36) et qui est fixé au moyen d'un guide à coulisse (90, 92) sur le composant d'extrémité (78), lequel guide à coulisse est incliné dans la direction radiale de telle sorte qu'un déplacement radial vers l'extérieur du bras (56) fasse tourner la partie annulaire (36) dans le sens d'une réduction de la distance entre le cliquet (66) et le composant d'extrémité (78).

6. Module de levier de ressort à disque selon l'une quelconque des revendications 1 à 5, **caractérisé en ce qu'**au niveau de la région d'extrémité (44) de la partie annulaire (36) pouvant être connectée rigidement à un levier de ressort à disque (22) est montée une roue dentée (58) réalisée sous forme de denture périphérique, laquelle est en prise transmettant le mouvement avec le cliquet (66) dans un sens de rotation de la roue dentée (58) et provoque lors de sa rotation par le biais du cliquet (66) un rattrapage de l'usure de l'embrayage.
